# EUROPEAN PATENT SPECIFICATION

(11) **EP 1 481 758 B1**
(45) Date of publication and mention of the grant of the patent: **02.11.2005**
(21) Application number: 02787988.1
(22) Date of filing: 26.11.2002
(51) Int. Cl.: B23Q 7/04

(54) **LATHE WITH A PART MANIPULATOR**
DREHMASCHINE MIT EINEM TEILEMANIPULATOR
TOUR EQUIPE D'UN MANIPULATEUR DE PIECES

(30) Priority: 06.02.2002 ES 200200288; 23.10.2002 ES 200202440
(43) Date of publication of application: 01.12.2004
(73) Proprietor: Danobat, S. Coop., 20870 Elgoibar Guipuzcoa (ES)
(72) Inventor: ANDONEGUI MILICUA, Javier, E-20870 Elgoibar Guipuzcoa (ES)
(74) Representative: Evens, Paul Jonathan
(86) International application number: PCT/ES2002/000559
(87) International publication number: WO 2003/066281

(56) References cited:
- DE-A- 4 022 458
- US-A- 4 302 144

## Description

The present invention refers to a lathe according to the preamble of claim 1, as for example known from US-A- 4 302 144. Such a lathe is foreseen of means to manipulate the pieces to be machined, in the sense that the pieces are carried to the place where they are machined and after being machined they are taken away to be substituted for another new piece to be machined, offering in such aspects a functionality which moreover makes the use of the lathe advantageous for its application.

Respect to the lathes destined to machining heavy pieces, the placing of conveyor belts installed as accessories of the lathe or even being part of the same is well known.

A known realization in this sense is the disposition of a mobile gantry, with moving and manipulation means, in assembly on movement guides situated as an accessory to the lathe. This solution is complicated and bulky, due to the fact that the structure the transporting gantry requires and its functional individuality with means which are independent from the lathe.

Spanish Patent P 0465162 introduces a loader - store of pieces, which can be connected as an accessory to the lathe, having this loader - store some means to place the pieces successively at an outlet, where they can be taken by a tilting manipulator mounted on a shaft. This solution is in turn complicated and expensive and it does not solve in a satisfactory way the complete feeding process and the collection of the pieces to be machined.

Patent EP 0539837 introduces a device with two manipulators, one to place the pieces to be machined and the other to collect them from the lathe once they are machined; resulting this solution complicated and expensive, both for the installation and for its operation.

Solutions are also known which have the head and the counterpoint of the lathe in a common trolley which is movable till a collecting place and store of the pieces, so that by means of the separation and approaching of the head and the counterpoint, on the mentioned bearing trolley of the same, the mentioned pieces are collected and left, moving them between the place of collection or the store and the place where they are machined, by means of the trolley movement.

This solution has the inconvenience that as the head is situated on a movable trolley, the actuation means of the head shall also be incorporated on the trolley, so that for great actuation powers the trolley needs to have greater dimensions due to the needed activation means, which brings also about the need to increase the dimension of the trolley holding means in its movable assembly.

Patent DE 19911156, on the other hand, includes a solution in which the head and the counterpoint of the lathe are incorporated on two independent trolleys which can be moved on horizontal and vertical guides to move the mentioned pieces between the place where they are machined and the point of collection or storage point.

In this solution the head is also incorporated on a movable trolley, which brings about the same inconveniences of the previous solution for high powers, as the actuation means of the head shall be included in the corresponding movable trolley. And on the other hand, due to the upwards movable disposition of the trolleys, the tool-carrying turret is situated beyond the machining area, so that the shavings and the refrigeration liquids of the machining fall on the mentioned turret.

In front of all this, according to the present invention, a lathe is proposed which is based on a different structural realization, with which the previously mentioned inconveniences of the known solutions are eliminated in an advantageous and practical way bringing about some functional features which improve the service of the lathe of application.

This lathe object of the invention includes a bench which determines a structure on which the lathe head is incorporated fixedly in vertical or in horizontal disposition, being at least one bearing trolley of a manipulator guided in the assembly on the mentioned structure of the bench to move the pieces to be machined till the machining position and take them away after the operation.

The bearing trolley of the manipulator is situated in longitudinal movement assembly on the lathe bench structure, determining the mentioned trolley moreover a transverse movement disposition and a vertical movement disposition of the set that makes up the manipulating device.

On the other hand, the disposition of the manipulating device itself on the bearing trolley includes an assembly which allows rotation and tilting movements of the manipulating device in a realization with two operative grips, by means of which they can take either part independently, in the operating function.

With this disposition, the manipulating device can move and collect the pieces to be machined from a feeding store and take them to the machining position on the lathe, as well as taking them away after the machining to unload them in the outlet container; allowing the double grip of the manipulating device to collect the piece and leave another one in one only operation movement, both in the machining place and in the feeding place and the place of unloading, which eases up the substitution of the pieces of application on the lathe, reducing to a minimum the inactivity time of the machining for the substitution of the pieces.

Thanks to the fixed disposition of the head on the structure of the lathe bench, the machining operation can be established with means incorporated on the head itself or from means situated independently on the bench with a transmission from them to the head, which allows the use of activating means of any power without it being necessary for the head fastening means to have an excess dimension.

The head and the counterpoint (if there is one) can be conventional ones, with the possibility for example to incorporate rollers of 120 millimetre diameter or more, without it being compulsory for the structure to have an excess dimension. And also, the pieces can be manipulated and machined, for example from 10 to 500 millimetre diameter and 200 to 2000 millimetre length, without having to modify the lathe structure.

The pieces manipulating device can nevertheless also be situated in a trolley independent from the tool-bearing turret, which brings about a reduction of the inactive machining times as the manipulating device can move and carry out the operations corresponding to its function while carrying out the machining. More than one tool-bearing turret can also be situated on the same guides to move the part manipulating trolley, to carry out simultaneous machining operations.

Thus, with the lathe object of the invention, advantages are reached, which make the use during the job to be developed more efficient and practical, making the following aspects to be outstanding:
- The needed time to incorporate and collect the pieces to be applied is reduced.
- A head with a bigger size can be situated without having to increase the dimension of the lathe structure.
- The fastening of the pieces to be machined is more rigid than with the solutions with mobile head.
- The charging capacity is greater than with the solutions where the head is at the same time the manipulating device.
- With the fixed head, the tool-bearing turret suffers positioning variations during the first passages of the machining, which are a greater trimming, but the position is corrected by the material recovering, so that in the last passages with a minor trimming the machining is carried out with precision, reaching this way a more perfect machining than with the solutions with mobile head, with which the piece suffers positioning variations during the greater trimming passages, maintaining the uncorrected position till the end of the machining.

In view of all this, the mentioned lathe of the invention certainly has some very advantageous features, acquiring own life and preferable character respect to the known lathes with the same application.

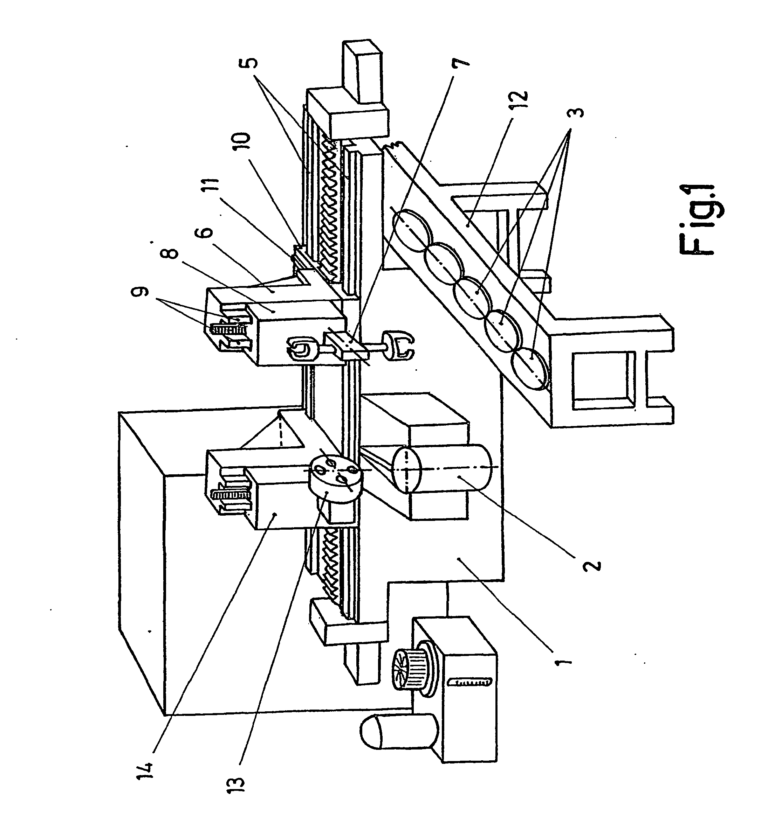

Figure 1 shows in schematic perspective a realization of the preconized lathe with vertical head.
Figure 2 shows a lathe realization with horizontal head actuated by transmission from independent means of the same.
Figure 3 is a perspective of the lathe according to the realization with horizontal head foreseen of actuation means incorporated on the same.
Figure 4 is an enlarged detail in perspective of the manipulator with double grip of the lathe.
Figures 5 to 8 are schemes corresponding to several non limitative possibilities of practical realizations of the lathe with vertical head, within the frame of the invention.
Figures 9 to 13 show respective schemes corresponding to several non limitative possibilities of practical realizations of the lathe with horizontal head.

The lathe object of the invention has a bench which determines a structure (1), on which the fastening head (2) and rotary activation of the pieces (3) to be machined are situated in fixed disposition.

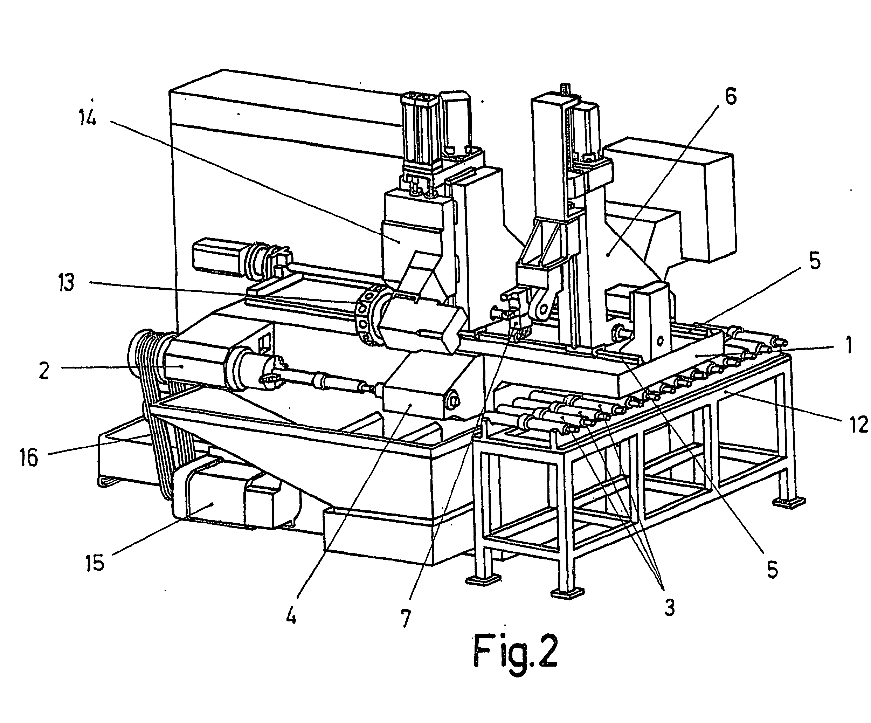

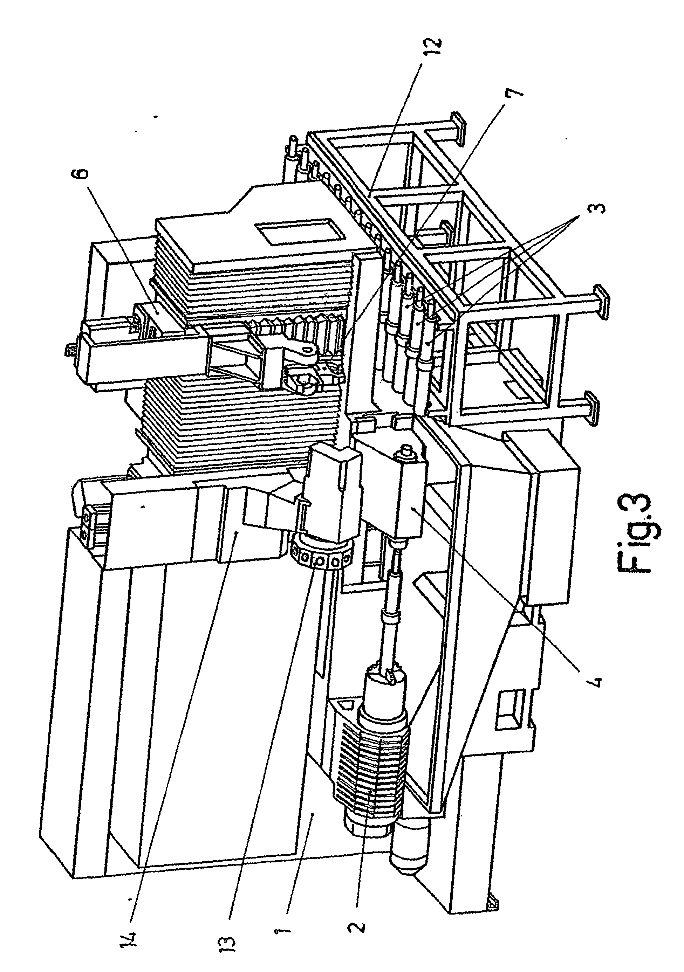

The head (2) can be vertical, as in figure (1), to carry out the machining of the pieces (3) of application situated on it; but it can also be horizontal, as in figures 2 and 3, having in this case the pieces (3) to be machined situated between the head (2) and a corresponding counterpoint (4) or other complementary fastening means.

The structure (1) of the bench of the machine determines at the upper part some longitudinal guides (5) on which at least a trolley (6) is incorporated in mobile assembly, in which a manipulator (7) is situated to carry the pieces (3) to the machining position and take them away after the machining.

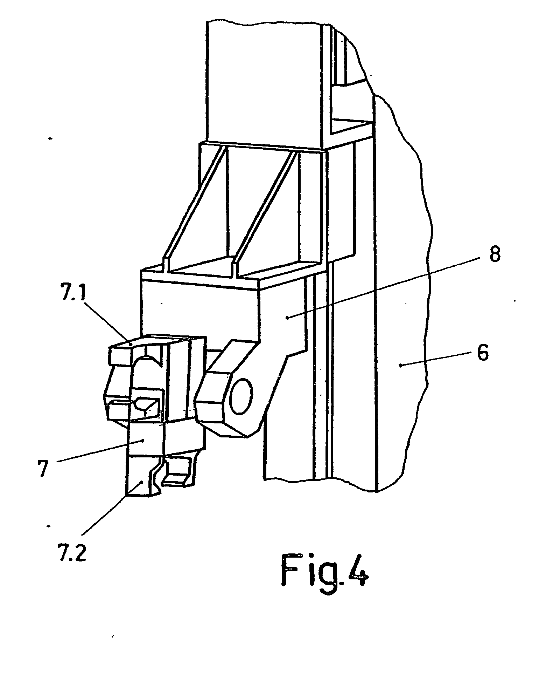

According to a feature of the invention, as it is observed in greater detail on figure 4, the manipulating device (7) is foreseen of two operative grips (7.1 and 7.2), being situated in a tilting disposition which allows to situate the mentioned grips (7.1 and 7.2) indifferently in a position to collect the piece (3) and in an empty waiting position or holding a piece (3).

The manipulator (7) is incorporated on a support (8), by means of which it can be moved vertically on the trolley (6) along some assembly guides (9) of the mentioned support (8) ; while the trolley itself (6) is situated on a foundation (10), in guided assembly respect to some transverse guides (11) of the mentioned foundation (10), thus with the possibility to move transversely on the same.

Thus, thanks to the disposition itself of the assembly on the support (8), to the disposition of the support (8) respect to the trolley (6), to the disposition of the trolley (6) on the foundation (10) and to the disposition of the mentioned foundation (10) on the longitudinal guides (5) of the structure (1), the manipulator (7) can carry out all the necessary movements to collect the pieces (3) to be machined, from a feeder (12), to carry them till situating them on the head (2) for their machining; as well as to take the machined pieces (3) to the place of unloading.

Thanks to the double grip (7.1 and 7.2), the head (7) allows moreover to carry a part (3) to be machined, to the head (2), for instance with grip (7.1) and by means of grip (7.2) take the piece (3), once it has been machined, away from the head (2), which reduces considerably the piece (3) substitution time, as the incorporation of a new part (3) to be machined and the withdrawal of the previously machined piece (3) is carried out by means of the same operation that moves the manipulator (7). In the same way, the withdrawal and unloading of the pieces (3) can be carried out by means of the same movement operation of the manipulator (7), if the unloading of the machined pieces (3) is carried out at the same place where the pieces (3) to be machined are collected or in an adjacent place.

The tool-bearing turret (13) of the lathe can be incorporated o the same trolley (6) which supports the manipulating device (7), with which, by means of only the activation means of the mentioned trolley (6) the movements of the manipulating device (7) can be carried out to place and withdraw the pieces (3) respect to the head (2), as well as the movements of the tool-bearing turret (13) for the machining.

Nevertheless, that disposition supposes the disabling of the turret (13) during the use of the manipulating device (7) and the disabling of the latter during the use of the turret (13), which reduces the productivity level of the lathe considerably.

Therefore, the incorporation of the tool-bearing turret (13) on an independent trolley (14), situated on the same guides (5) of the upper part of the structure (1) of the bench, with which the manipulating device (7) and the tool-bearing turret (13) can be used simultaneously in an independent way, being it possible to unload a machined piece (3) and collect another new piece (3) to be machined, while the machining of a third piece (3) situated on the head (2) is being carried out, increasing with this the lathe yield, as the empty inoperative machining times are reduced to minimum.

On the same guides (5) of the bench structure (1), moreover, other accessory trolleys supporting other tool-bearing turrets and other susceptible manipulators to carry out multiple operations related to the pieces (3) of application, with some minimum inactive time of the machining.

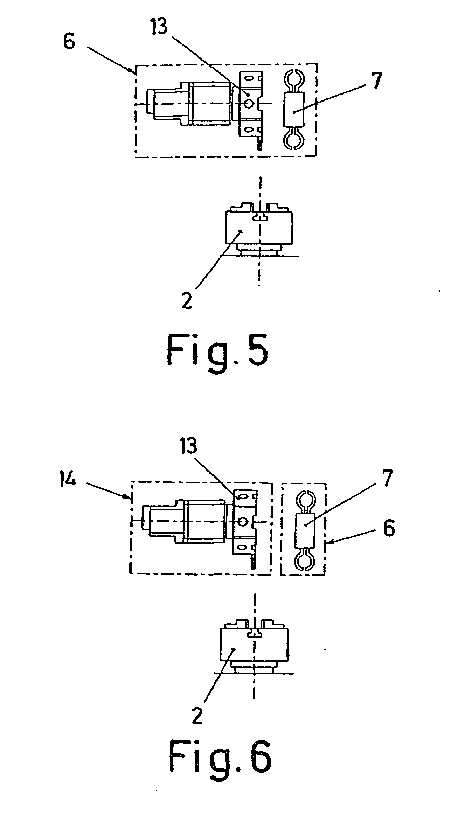

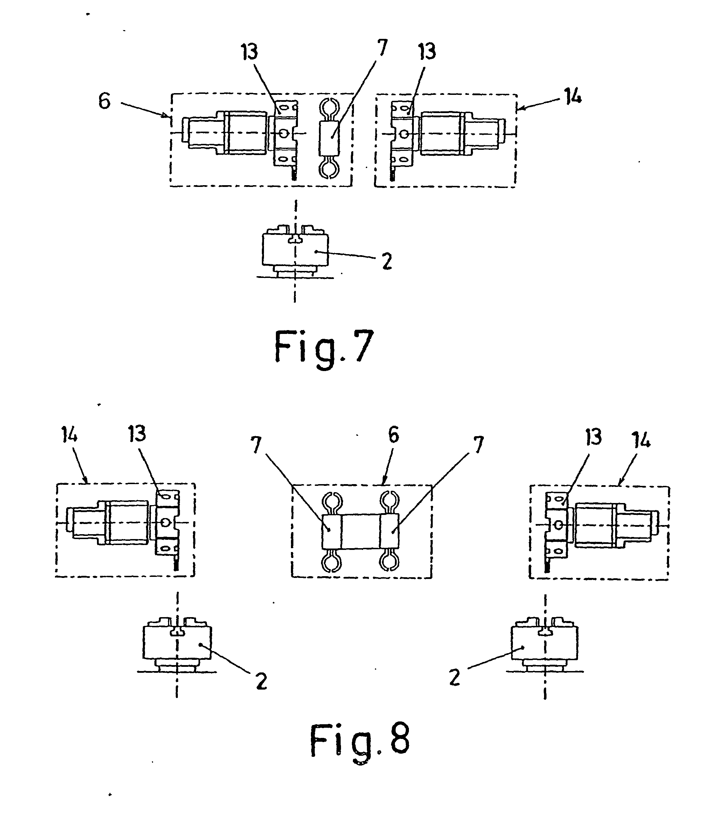

Figures 5 to 8 show schematically different possibilities of the practical disposition of the lathe, in the realization with the vertical head (2); representing figure 5 a disposition with a trolley (6) in which a manipulating device (7) and the tool bearing turret (13) are incorporated, figure 6 shows a disposition with a manipulating device (7) supporting trolley (6) and another independent trolley (14) which supports a tool-bearing turret (13), figure 7 a disposition with a supporting trolley (6) supporting a manipulating device (7) together with a tool-bearing turret (13) and another independent trolley (14) having a second tool-bearing turret (13) and figure 8 a disposition with two heads (2) and above both supporting trolleys (14) of both tool-bearing turrets (13) and an intermediate trolley (6) with two manipulating devices (7) in a double manipulating device.

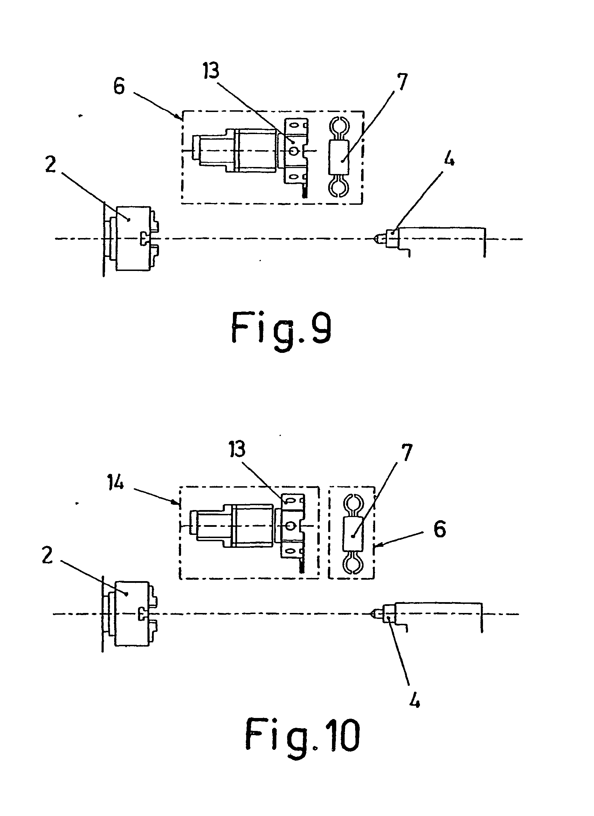

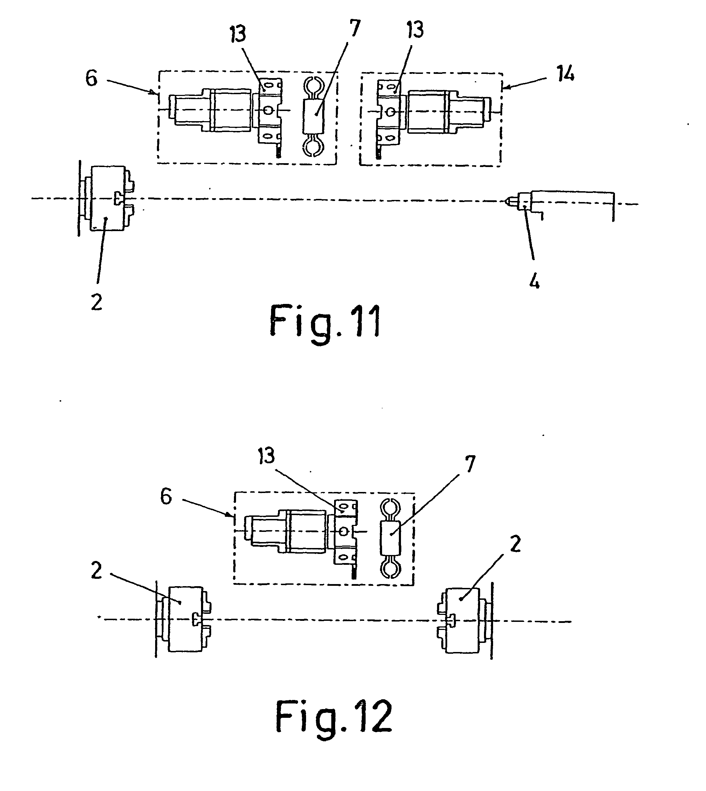

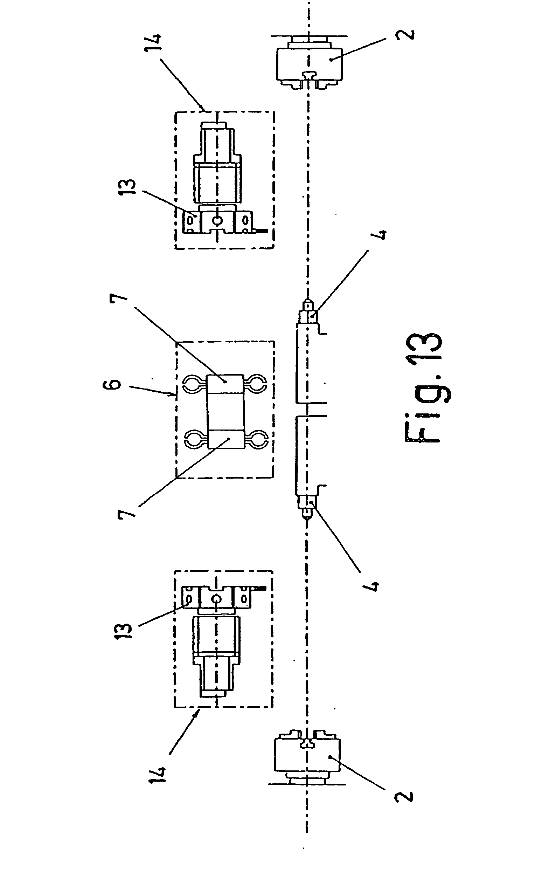

Figures 9 and 13 show in turn different possibilities of the practical realization of the lathe with the horizontal head (2), representing figures 9, 10 and 11 respective similar dispositions of those corresponding to figures 5, 6 and 7, in this realization, while figure 12 is a disposition as the one of figure 9 but with two facing heads (2) instead of one head (2) and a counterpoint (4), corresponding figure 13 to a similar disposition to that of figure 8, in this realization.

The mentioned possibilities of practical disposition of the lathe, in both realizations, are nevertheless not limitative, as others can also be established, fulfilling with the concept of the invention.

The set of tool-bearing turrets (13) and the counterpoint (4) (if there is one), can also be substituted for a machining unit which is complemented with the part fixing head (3) for the machining or with the corresponding fastening and fixing means.

In the dispositions with the horizontal head (2), moreover a complementary tool-bearing turret (13) can be incorporated on the trolley situated beyond the machining area, which allows to carry out complementary machining passages in practically a simultaneous way with each passage that is carried out with the means of the upper part, allowing to reduce the time to be used in the machining of the pieces (3).

The fixed disposition of the head (2) assures in any case an immobility which maintains the piece (3) fixing stable, allowing to reach a machining with a great perfection.

The mentioned fixed disposition of the head (2) allows moreover that the activation means of the rotary operation of the plate of the same, can be integrated in the head (2) itself, as in the realization of figure 3, or it can have some independent actuation means (15), to establish, by means of transmission (16), the head activation (2), as in the realization of figure 2.

On the other hand, referring to the fixed head (2), activation means (15) can be installed of any power and rollers with great dimensions so that the functional set results resistant, admitting the machining of big parts (3), without requiring the lathe structure great dimensions.

## Claims

1. Lathe with pieces manipulating device, comprising:
a structure (1) defining on its upper part a machine bench supporting a vertical or horizontal head (2), a tool holder (13) and means (7) for manipulating pieces (3) to be machined, the tool holder (13) being mounted on a first trolley (14) movably mounted on first longitudinal guides, and with said manipulating means (7) comprising:
a second trolley (6) having a foundation (10) moveably mounted on second longitudinal guides (5) for movement therealong and being incorporated in a transverse moving assembly (10, 11) for movement transverse to the longitudinal guides (5);
a support (8) moveably mounted on the second trolley (6) for vertical movement relative thereto; and
a manipulation device (7) for the handling of pieces (3) rotatably or tiltably mounted on the support (8), whereby the manipulation device (7) has mobility in all the senses relative to the structure (1), **characterised in that** the tool holder is a toll-bearing turret (13) and **in that** the first trolley (14), wherein the tool holder (13) is mounted, and the second trolley (6), wherein the manipulation device (7) is mounted, both trolleys (6) and (14) are placed on a common longitudinal guide system (5).

2. Lathe according to claim 1, in which the head (2) is situated fixedly on the structure (1), with the head being activated by an independent activation means (15) via a transmission (16).

3. Lathe according to claim 1, wherein the manipulating device (7) includes two operative grips (7.1 and 7.2), which can be situated indistinctly, by means of tilting or rotation of the manipulating device (7), between an operative position to collect the pieces (3) of application and an empty waiting position or loading position, holding a piece (3).

## Patentansprüche

1. Drehbank mit Werkstückmanipulationsvorrichtung, aufweisend:
eine Konstruktion (1), welche auf ihrem oberen Teil eine Werkbank begrenzt, die einen vertikalen oder horizontalen Kopf (2), einen Werkzeughalter (13) und eine Vorrichtung (7) für die Manipulation von maschinell zu bearbeitenden Teilen (3) trägt, wobei der Werkzeughalter (13) auf einem ersten Schlitten (14) angebracht ist, der bewegbar auf ersten Längsführungsschienen montiert ist, und wobei die Manipulationsvorrichtung (7) aufweist:
einen zweiten Schlitten (6), der eine Basis (10) hat, die auf zweiten Längsführungsschienen (5) bewegbar für die Bewegung entlang denselben montiert ist und der in eine transversale Bewegungsanordnung (10, 11) für die Bewegung transversal zu den Längsführungsschienen (5) inkorporiert ist;
eine Auflage (8), die bewegbar auf dem zweiten Schlitten (6) für vertikale Bewegung relativ zu diesem montiert ist; und
eine Manipulationsvorrichtung (7) für die Handhabung von Teilen (3), die drehbar oder kippbar auf der Auflage (8) befestigt sind, wodurch die Manipulationsvorrichtung (7) Mobilität in allen Richtungen relativ zur Konstruktion (1) hat, **dadurch gekennzeichnet, dass** der Werkzeughalter ein werkzeugtragender Revolverkopf (13) ist, und dass der erste Schlitten (14), in welchem der Werkzeughalter (13) montiert ist, und der zweite Schlitten (6), in welchem die Manipulationsvorrichtung (7) montiert ist, beide, d.h. beide Schlitten (6) und (14) auf einem gemeinsamen Längsführungsschienensystem (5) positioniert sind.

2. Drehbank nach Anspruch 1, **dadurch gekennzeichnet, dass** der Kopf (2) fest auf der Konstruktion (1) angebracht ist, wobei der Kopf durch eine unabhängige Betätigungsvorrichtung (15) über eine Kraftübertragung (16) betätigt wird.

3. Drehbank nach Anspruch 1, **dadurch gekennzeichnet, dass** die Manipulationsvorrichtung (7) zwei Arbeitsgriffe (7.1 und 7.2) einschließt, die in nicht festgelegter Weise durch das Kippen oder Drehen der Manipulationsvorrichtung (7) zwischen einer operativen Position zur Aufnahme der Werkstücke (3) und einer leeren Warteposition oder Beschickungsposition, wobei ein Werkstück (3) gehalten wird, positioniert werden können.

## Revendications

1. Tour équipé d'un dispositif manipulateur de pièces, comprenant :
une structure (1) définissant sur sa partie supérieure un banc de machine supportant une tête (2) verticale ou horizontale, un porte-outil (13) et des moyens (7) pour manipuler des pièces (3) à usiner, le porte-outil (13) étant monté sur un premier chariot (14) monté de manière mobile sur des premiers guides longitudinaux, et avec lesdits moyens manipulateurs (7) comprenant :
un second chariot (6) ayant une fondation (10) montée de manière mobile sur des seconds guides longitudinaux (5) pour se déplacer le long de ceux-ci et qui est incorporé dans un ensemble (10, 11) se déplaçant transversalement pour se déplacer transversalement le long des guides longitudinaux (5) ;
un support (8) monté de manière mobile sur le second chariot (6) pour se déplacer verticalement par rapport à celui-ci ; et
un dispositif manipulateur (7) pour la manipulation de pièces (3) monté de manière rotative ou basculante sur le support (8), le dispositif manipulateur (7) étant mobile dans tous les sens par rapport à la structure (1), **caractérisé en ce que** le porte-outil est une tourelle porte-outil (13) et **en ce que** le premier chariot (14), dans lequel est monté le porte-outil (13), et le second chariot (6), dans lequel est monté le dispositif manipulateur (7), à la fois les chariots (6) et (14), sont placés sur un système de guidage longitudinal commun (5).

2. Tour selon la revendication 1, dans lequel la tête (2) est placée fixement sur la structure (1), la tête étant actionnée par des moyens d'actionnement indépendants (15) via une transmission (16).

3. Tour selon la revendication 1, dans lequel le dispositif manipulateur (7) comprend deux poignées de service (7.1 et 7.2), qui peuvent être placées indistinctement, au moyen du basculement ou de la rotation du dispositif manipulateur (7), entre une position de service pour recueillir les pièces (3) d'application et une position d'attente à vide ou une position de chargement, retenant une pièce (3).
